# EUROPEAN PATENT APPLICATION

(11) **EP 4 418 341 A2**
(43) Date of publication of application: **21.08.2024**
(21) Application number: 23220759.7
(22) Date of filing: 29.12.2023
(51) Int. Cl.: H01M 4/131, H01M 4/62, H01M 4/36, H01M 4/02

(54) **POSITIVE ELECTRODE PLATE AND NON-AQUEOUS ELECTROLYTE SECONDARY BATTERY**

(30) Priority: 15.02.2023 JP 2023021652
(71) Applicant: Prime Planet Energy & Solutions, Inc., Chuo-ku Tokyo 103-0022 (JP)
(72) Inventor: MATSUMOTO, Hayaki, Tokyo, 103-0022 (JP)
(74) Representative: Kuhnen & Wacker Patent- und Rechtsanwaltsbüro PartG mbB

(57) **Abstract**

The present disclosure relates to a positive electrode plate (10) including a core body (11) and an active material layer (12), wherein the active material layer (12) includes a conductive auxiliary agent (22), and the conductive auxiliary agent (22) present in a vicinity of a surface of the active material layer (12) opposite to the core body (11) includes a carbon nanotube. The present disclosure also relates to a non-aqueous electrolyte secondary battery (200) including the positive electrode plate (10). According to the present disclosure, there are provided: a positive electrode plate (10) in which an output characteristic is improved and electric conductivity is suppressed from being too high; and a non-aqueous electrolyte secondary battery (200) including the positive electrode plate (10).

## Description

### CROSS REFERENCE TO RELATED APPLICATIONS

This nonprovisional application is based on Japanese Patent Application No. 2023-021652 filed on February 15, 2023 with the Japan Patent Office, the entire contents of which are hereby incorporated by reference.

### BACKGROUND OF THE INVENTION

### Field of the Invention

The present invention relates to a positive electrode plate and a non-aqueous electrolyte secondary battery (hereinafter also referred to as a battery) including the positive electrode plate.

### Description of the Background Art

Japanese Patent Laying-Open No. 2016-48698 proposes to use a carbon nanotube (hereinafter also referred to as CNT) in order to improve an output characteristic in a positive electrode of a lithium ion secondary battery.

### SUMMARY OF THE INVENTION

When the CNT is used as a conductive auxiliary agent in a positive electrode plate, the output characteristic is improved but electric conductivity may become too high. When the content of the CNT in the positive electrode plate is reduced to such an extent that the electric conductivity does not become too high, the output characteristic is less likely to be improved.

It is an object of the present invention to provide: a positive electrode plate in which an output characteristic is improved and electric conductivity is suppressed from being too high; and a battery including the positive electrode plate.

The present invention provides the following positive electrode plate and battery.
[1] A positive electrode plate comprising a core body and an active material layer, wherein
   the active material layer includes a conductive auxiliary agent, and
   the conductive auxiliary agent present in a vicinity of a surface of the active material layer opposite to the core body includes a carbon nanotube.
[2] The positive electrode plate according to [1], wherein the conductive auxiliary agent present in a vicinity of a surface of the active material layer on the core body side includes acetylene black.
[3] The positive electrode plate according to [1] or [2], wherein the conductive auxiliary agent present in a vicinity of a surface of the active material layer on the core body side includes no carbon nanotube.
[4] The positive electrode plate according to any one of [1] to [3], wherein the active material layer includes a deep layer disposed on the core body side, and a surficial layer disposed on a side of the deep layer opposite to the core body side.
[5] The positive electrode plate according to any one of [1] to [4], wherein the active material layer includes an active material particle, and the active material particle includes a large particle and a small particle.
[6] The positive electrode plate according to any one of [1] to [5], wherein a particle packing density of the active material layer is 3.0 to 3.8 g/cm³.
[7] The positive electrode plate according to any one of [1] to [6], wherein the core body includes an aluminum alloy foil.
[8] A non-aqueous electrolyte secondary battery comprising the positive electrode plate according to any one of [1] to [7].

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing an exemplary configuration of a positive electrode in the present embodiment.
Fig. 2 is a schematic diagram showing another exemplary configuration of the positive electrode in the present embodiment.
Fig. 3 is a schematic flowchart showing a method of manufacturing the positive electrode.
Fig. 4 is a schematic diagram showing an exemplary configuration of a battery in the present embodiment.
Fig. 5 is a schematic diagram showing an exemplary configuration of an electrode assembly in the present embodiment.
Fig. 6 shows a cross section of an active material layer of a positive electrode plate produced in an Example 1.

### DESCRIPTION OF THE PREFERRED EMBODIMENTS

Hereinafter, embodiments of the present invention will be described with reference to figures, but the present invention is not limited to the below-described embodiments. In each of all the figures described below, a scale is appropriately adjusted to facilitate understanding of each component, and the scale of each component shown in the figures does not necessarily coincide with the actual scale of the component.

### <Positive Electrode Plate>

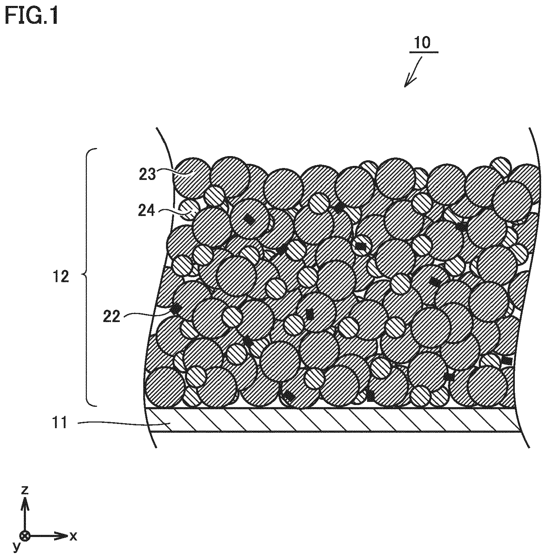

Fig. 1 is a schematic diagram showing an exemplary configuration of a positive electrode plate in the present embodiment. A positive electrode plate 10 includes, for example, a core body 11 and an active material layer 12. Core body 11 is an electrically conductive sheet. Core body 11 may be, for example, an aluminum alloy foil or the like. Core body 11 may have a thickness of, for example, 10 µm to 30 µm. The thickness of core body 11 can be measured by a constant-pressure thickness measurement device (thickness gauge). Active material layer 12 can be disposed on a surface of core body 11. Active material layer 12 may be disposed on one or both of front and rear surfaces of core body 11.

Active material layer 12 may have a thickness of, for example, 10 µm to 200 µm. The thickness of active material layer 12 is measured in a cross sectional SEM image of active material layer 12. An observation plane can be parallel to the thickness direction of active material layer 12. The thickness of active material layer 12 is measured at five or more positions. The thickness of active material layer 12 is defined as an arithmetic average of the thicknesses at the five or more positions. A particle packing density of active material layer 12 can be, for example, 3.0 to 3.8 g/cm³ or more.

Active material layer 12 includes active material particles and a conductive auxiliary agent 22. Conductive auxiliary agent 22 present in the vicinity of a surface of active material layer 12 opposite to core body 11 includes a CNT. Since the conductive auxiliary agent including the CNT is disposed in the vicinity of the surface of the active material layer opposite to the core body, the output characteristic can be improved and the electric conductivity can be avoided from being too high. The vicinity of the surface of active material layer 12 opposite to core body 11 may be a region that includes the surface of active material layer 12 opposite to core body 11 and that is present to extend from the surface of active material layer 12 opposite to core body 11 to 1/5, 2/5, 1/2, 3/5, or 4/5 of the thickness of active material layer 12 in the thickness direction of active material layer 12.

The CNT is fibrous carbon having such a structure that graphene that forms a carbon hexagonal network is rounded into a tubular shape. The CNT has a high aspect ratio and a property with an excellent electron conductivity. Examples of the CNT include: a single-walled CNT composed of one layer of graphene; a multi-walled CNT composed of two or more layers of graphene; and the like. The multi-walled CNT is preferable from the viewpoint of thermal and chemical stabilities. The CNT preferably includes a surface-modified CNT.

As the CNT, a commercially available CNT may be purchased and used, or a CNT produced by a conventionally known CNT manufacturing method may be used. Examples of such a method include a chemical vapor deposition (CVD) method, an arc discharging method, a laser evaporation method, and the like.

The content of the CNT in active material layer 12 may be, for example, less than 0.6 wt% based on 100 wt% of the total solid content of active material layer 12 as a reference. The content of the CNT in active material layer 12 is preferably 0.5 wt% or less, is more preferably 0.4 wt% or less, and is, for example, 0.15 wt% or more, based on 100 wt% of the total solid content of active material layer 12 as a reference.

In addition to the CNT, conductive auxiliary agent 22 can include carbon black such as acetylene black (AB), another carbon material (for example, graphite), or the like. Among them, the AB is preferable. When conductive auxiliary agent 22 includes the AB, the AB is preferably disposed in the vicinity of the surface of active material layer 12 on the core body 11 side from the viewpoint of improving the output characteristic and avoiding the electric conductivity from being too high. The vicinity of the surface of active material layer 12 on the core body 11 side can be a region that includes the surface of active material layer 12 on the core body 11 side and that is other than the vicinity of the surface of active material layer 12 opposite to core body 11.

When conductive auxiliary agent 22 includes the AB, the content of the AB may be, for example, less than 2.5 wt% based on 100 wt% of the total solid content of active material layer 12 as a reference. The content of the AB in active material layer 12 is preferably 2.0 wt% or less, is more preferably 1.5 wt% or less, and is, for example, 0.15 wt% or more, based on 100 wt% of the total solid content of active material layer 12 as a reference.

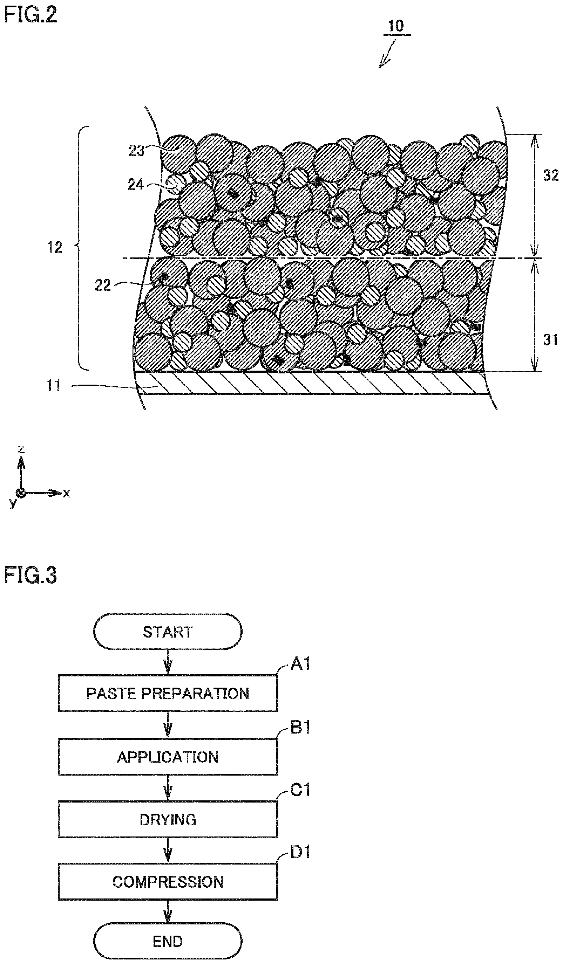

As shown in Fig. 2, active material layer 12 can include: a deep layer 31 disposed on the core body 11 side; and a surficial layer 32 disposed on a side of the deep layer opposite to the core body 11 side. Active material layer 12 may have a two-layer structure consisting of the deep layer and the surficial layer. Deep layer 31 and surficial layer 32 may have the same thickness or different thicknesses. A ratio (deep layer/surficial layer) of the thicknesses of deep layer 31 and surficial layer 32 is preferably 4/5 to 5/4. Conductive auxiliary agent 22 in surficial layer 32 includes the CNT. Conductive auxiliary agent 22 in deep layer 31 can include a carbon material (for example, AB) other than the CNT.

Conductive auxiliary agent 22 present in the vicinity of the surface of active material layer 12 on the core body 11 side or in deep layer 31 can include the CNT and the carbon material (for example, AB) other than the CNT, but preferably includes no CNT from the viewpoint of avoiding the electric conductivity from being too high. Conductive auxiliary agent 22 present in the vicinity of the surface of active material layer 12 opposite to the core body 11 side or in surficial layer 32 may include the carbon material (for example, AB) other than the CNT or may include no carbon material (for example, AB) other than the CNT.

Each of the active material particles may be a particle containing a lithium transition metal composite oxide. A crystal structure of the lithium transition metal composite oxide is not particularly limited, and may be a lamellar structure, a spinel structure, an olivine structure, or the like. As the lithium transition metal composite oxide, a lithium transition metal composite oxide including at least one of Ni, Co, and Mn as a transition metal element is preferable, and specific examples thereof include a lithium-nickel-based composite oxide, a lithium-cobalt-based composite oxide, a lithium-manganese-based composite oxide, a lithium-nickel-manganese-based composite oxide, a lithium-nickel-cobalt-manganese-based composite oxide, a lithium-nickel-cobalt-aluminum-based composite oxide, a lithium-iron-nickel-manganese-based composite oxide, and the like. When the active material particle includes nickel, a ratio of the content of nickel to the metal elements other than lithium in the active material particle may be, for example, 60 mol% or less. The active material particle may be a surface-coated particle.

The active material particle may include, for example, a lamellar metal oxide. The lamellar metal oxide is represented by the following formula (1):

Li₁₋ₐ₁Niₓ₁Me¹₁₋ₓ₁O₂ (1)

In the formula (1), "a1" satisfies the relation "-0.3≤a1≤0.3". "x1" satisfies the relation "0.1≤x1≤0.95". "Me¹" represents at least one selected from a group consisting of Co, Mn, Al, Zr, Ti, V, Cr, Fe, Cu, Zn, Mo, Sn, Ge, Nb, and W.

The active material particles include a first particle group and a second particle group. The first particle group is constituted of large particles 23. The second particle group can be constituted of small particles 24. Each of large particles 23 may be an aggregated particle (secondary particle) in which a primary particle is aggregated. Each of small particles 24 may be a single-particle. An average particle size (D50) of the first particle group (large particles) may be, for example, 10 µm or more and 20 µm or less, and is preferably 14 µm or more and 18 µm or less. An average primary particle size may be, for example, 0.1 µm or more and 3 µm or less, and is preferably 0.5 µm or more and 2.5 µm or less. An average particle size (D50) of the second particle group (small particles) may be, for example, 2 µm or more and 6 µm or less, and is preferably 3 µm or more and 6 µm or less. In the present specification, the average particle size (D50) represents a particle size (hereinafter, also referred to as D50) corresponding to a cumulative particle volume of 50% from the small particle size side with respect to the total particle volume in the volume-based particle size distribution. The average particle size (D50) can be measured by a laser diffraction/scattering method. An average primary particle size is an average of distances in ten primary particles randomly extracted on the SEM image, each of the distances being a distance between two most distant points on the outline of each of the ten primary particles. A BET specific surface area of the active material particles may be, for example, 0.5 m²/g to 1.5 m²/g.

The content of the active material particles in active material layer 12 may be, for example, 70 wt% or more, is preferably 80 to 99 wt%, and is more preferably 90 to 99 wt% or less, based on 100 wt% of the total solid content of active material layer 12 as a reference.

Active material layer 12 can include a binder. Examples of the binder include polyvinylidene difluoride (PVDF), polytetrafluoroethylene (PTFE), polyimide (PI), polyamide (PA), polyamide-imide (PAI), butadiene rubber (BR), styrene-butadiene rubber (SBR), nitrile-butadiene rubber (NBR), styrene-ethylene-butylene-styrene block copolymer (SEBS), carboxymethyl cellulose (CMC), a combination thereof, and the like. The content of the binder in active material layer 12 may be, for example, 0.5 to 10 wt%, and is preferably 1.0 to 5 wt%, based on 100 wt% of the total solid content of active material layer 12 as a reference.

As shown in Fig. 3, a method of manufacturing positive electrode plate 10 according to the present embodiment includes positive electrode slurry preparation (A1), application (B1), drying (C1), and compression (D1).

In the positive electrode slurry preparation (A1), a positive electrode slurry including the active material particles and the CNT is prepared. The positive electrode slurry is prepared by dispersing the active material particles in a dispersion medium. An organic solvent can include, for example, at least one selected from a group consisting of N-methyl-2-pyrrolidone (NMP), tetrahydrofuran (THF), dimethylformamide (DMF), methyl ethyl ketone (MEK) and dimethyl sulfoxide (DMSO). Any amount of the organic solvent is usable. The positive electrode slurry can have any solid content concentration (mass fraction of the solid content). The slurry can have a solid content concentration of, for example, 40% to 80%. Any stirring device, mixing device, or dispersing device can be used for the mixing.

The application (B 1) can include applying the positive electrode slurry onto a surface of the substrate so as to form a coating film. In the present embodiment, the positive electrode slurry can be applied to the surface of the substrate by any application device. When the active material layer includes the deep layer and the surficial layer, a first coating film for the deep layer and a second coating film for the surficial layer may be formed sequentially or substantially simultaneously. For example, a slurry for the deep layer can be applied onto one surface of the core body to form the first coating film, and then a slurry for the surficial layer can be applied thereonto to form a second coating film. In the present specification, the term "coating film" may collectively represent both the first coating film and the second coating film.

The drying (C1) can include heating and drying the coating film by, for example, a hot air dryer or the like so as to form a dried coating film. The compression (D 1) can include compressing the dried coating film using any compression device so as to form active material layer 12. The dried applied film is compressed to form active material layer 12, thereby completing positive electrode plate 10. Positive electrode plate 10 can be cut into a predetermined planar size in accordance with a specification of a battery. Positive electrode plate 10 may be cut to have a strip-shaped planar shape, for example. Positive electrode plate 10 may be cut to have a quadrangular planar shape, for example.

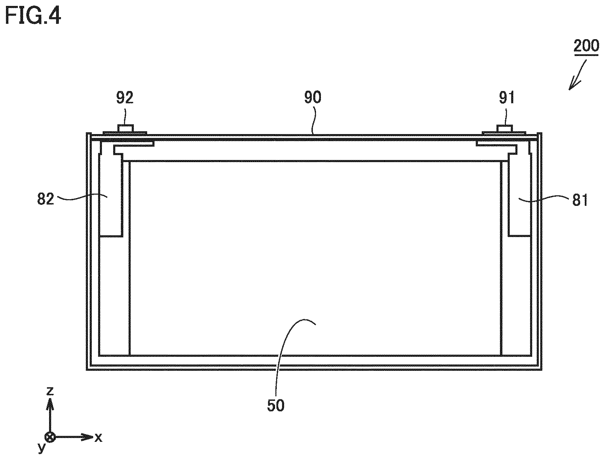

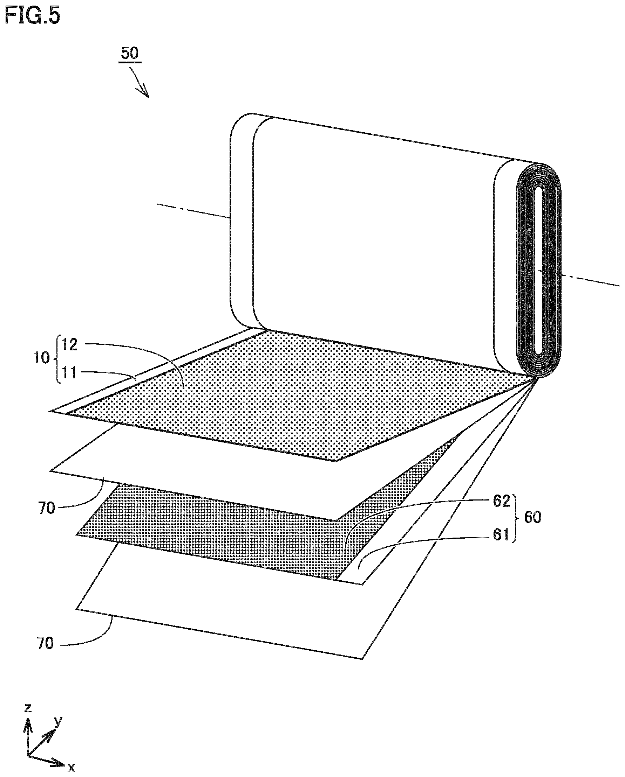

The battery can be a lithium ion battery. Fig. 4 is a schematic diagram showing an exemplary lithium ion battery in the present embodiment. A battery 200 shown in Fig. 4 may be, for example, a lithium ion battery for a main electric power supply, a motive power assisting electric power supply, or the like in an electrically powered vehicle. Battery 200 includes an exterior package 90. Exterior package 90 accommodates an electrode assembly 50 and a non-aqueous electrolyte (not shown). Electrode assembly 50 is connected to a positive electrode terminal 91 by a positive electrode current collecting member 81. Electrode assembly 50 is connected to a negative electrode terminal 92 by a negative electrode current collecting member 82. Fig. 5 is a schematic diagram showing an exemplary electrode assembly in the present embodiment. Electrode assembly 50 is a wound type. Electrode assembly 50 includes positive electrode plate 10, a separator 70, and a negative electrode plate 60. That is, battery 200 includes positive electrode plate 10. Positive electrode plate 10 includes active material layer 12 and core body 11. Negative electrode plate 60 includes a negative electrode active material layer 62 and a negative electrode substrate 61.

### [Examples]

Hereinafter, the present invention will be described in more detail with reference to examples. "%" and "parts" in the examples are mass% and parts by mass unless otherwise stated particularly.

### <Measurement for Average Particle Sizes (D50) of First and Second Lithium Composite Oxide Particles>

Volume-based particle size distributions of the first and second lithium composite oxide particles were measured using a commercially available laser diffraction/scattering type particle size distribution measurement device, and a particle size corresponding to a cumulative frequency of 50 volume% from a fine particle side having a small particle size was found as each of the average particle size (D50) of the first lithium composite oxide particles and the average particle size (D50) of the second lithium composite oxide particles.

### <Measurement for BET Specific Surface Areas of First and Second Lithium Composite Oxide Particles>

BET specific surface areas of the first and second lithium composite oxide particles were measured in accordance with a nitrogen adsorption method using a commercially available specific surface area measurement device ("Macsorb Model-1208" (provided by MOUNTECH)).

### <Observation of Cross Section of Electrode Plate>

A cross section observation sample of the positive electrode sheet was produced by a cross section polisher process. A SEM was used to obtain an SEM image of this sample.

### <Production of Negative Plate>

Graphite (C) serving as a negative electrode active material, styrene-butadiene rubber (SBR) serving as a binder, and carboxymethyl cellulose (CMC) serving as a thickener were mixed in an ion-exchanged water at a mass ratio of C:SBR:CMC = 98:1:1, thereby preparing a negative electrode active material layer formation slurry. The negative electrode active material layer formation slurry was applied onto a copper foil, and was dried to form a negative electrode active material layer. The negative electrode active material layer was roll-pressed by a roller to attain a predetermined density and was then cut to a predetermined size, thereby producing a negative electrode plate.

### <Production of Lithium Ion Secondary Battery for Evaluation>

A porous polyolefin sheet was prepared as a separator. A positive electrode plate produced in each of an Example and Comparative Examples and the negative electrode plate produced above were stacked on each other with the separator being interposed therebetween, thereby producing a stacked type electrode assembly. An electrode terminal was attached to the stacked type electrode assembly, this was inserted into a battery case composed of an aluminum laminate sheet, and a non-aqueous electrolyte was injected thereinto. As the non-aqueous electrolyte, a non-aqueous electrolyte was employed in which LiPF₆ serving as a supporting salt was dissolved at a concentration of 1 mol/L in a mixed solvent including ethylene carbonate (EC) and ethyl methyl carbonate (EMC) at a volume ratio of EC:EMC = 30:70 with vinylene carbonate being added to have 0.3 mass%. Then, the battery case was sealed to obtain a lithium ion secondary battery for evaluation.

### <Evaluation on Output Characteristic (Internal Resistance Ratio Measurement)>

As initial charging, each lithium ion secondary battery for evaluation was subjected to constant-current charging with a current density of 0.2 mA/cm² under a temperature environment of 25°C until 4.25 V was attained, and was then subjected to constant-voltage charging at a voltage of 4.25 V until a current density of 0.04 mA/cm² was attained. After resting for 10 minutes, each lithium ion secondary battery for evaluation was subjected to constant-current discharging with a current density of 0.2 mA/cm² until 3.0 V was attained.

Each lithium ion secondary battery for evaluation was adjusted to each of SOCs of 50% and 80% so as to measure an output resistance (internal resistance ratio).

### <Example 1>

As the first lithium composite oxide particles (small particles), LiNi_{0.6}Co_{0.2}Mn_{0.2}O₂ in the form of single-particles with an average particle size (D50) of 3.9 µm and a BET specific surface area of 0.60 m²/g was prepared. As the second lithium composite oxide particles (large particles), LiNi_{0.55}Co_{0.20}Mn_{0.25}O₂ in the form of secondary particles with an average primary particle size of 1.8 µm, an average particle size (D50) of 16.5 µm, and a BET specific surface area of 0.20 m²/g was prepared.

The first lithium composite oxide particles and the second lithium composite oxide particles were mixed at a mass ratio of 50:50, thereby preparing active material particles 1. Active material particles 1, AB serving as a conductive auxiliary agent, and PVDF serving as a binder were mixed at a mass ratio of active material particles 1 : AB : PVDF = 97.5 : 1.5 : 1.0, and an appropriate amount of NMP was added to the obtained mixture, thereby preparing a positive electrode active material layer formation slurry A. Further, active material particles 1 were mixed with CNT serving as a conductive auxiliary agent and PVDF serving as a binder at a mass ratio of active material particles 1 : CNT : PVDF = 98.6 : 0.4 : 1.0, and an appropriate amount of NMP was added to the obtained mixture, thereby preparing a positive electrode active material layer formation slurry B.

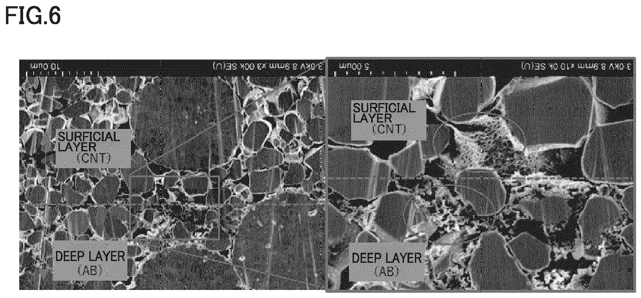

Positive electrode active material layer formation slurry A was applied onto each of both surfaces of a core body composed of aluminum foil, and was dried to form a deep-layer dried coating film. Thereafter, positive electrode active material layer formation slurry B was applied onto the deep-layer dried coating film so as to have a weight comparable to that of the deep-layer dried coating film, and was dried to form a surface-layer dried coating film. The active material layer having such a two-layer structure was roll-pressed by a roller, and was then cut to a predetermined size, thereby producing a positive electrode plate having the active material layer including the deep layer and the surficial layer. Results of evaluation on the output resistance are shown in Table 1. Further, it was confirmed by cross-sectional SEM observation of the active material layer that the CNT was present in the vicinity (surficial layer side) of the surface of the active material layer opposite to the core body, and the AB was present in the vicinity (deep layer side) of the surface of the active material layer on the core body side. Fig. 6 shows a cross sectional SEM image of the active material layer. The thicknesses of the deep layer and the surficial layer were 70 µm and 60 µm, respectively.

### <Comparative Examples 1 and 2>

A positive electrode plate of a Comparative Example 1 was produced in the same manner as in Example 1 except that the active material layer was formed using only positive electrode active material layer formation slurry B. A positive electrode plate of a Comparative Example 2 was produced in the same manner as in Example 1 except that the active material layer was formed using only positive electrode active material layer formation slurry A. Results are shown in Table 1.

**[Table 1]**

| | Type of Conductive Auxiliary Agent | | Output Resistance (mΩ) | |
|---|---|---|---|---|
| | Vicinity of Surface of Active Material Layer Opposite to Core Body | Vicinity of Surface of Active Material Layer on Core Body Side | SOC50% | SOC80% |
| Comparative Example 1 | CNT | CNT | 71 | 80 |
| Example 1 | CNT | AB | 73 | 81 |
| Comparative Example 2 | AB | AB | 77 | 85 |

Since the CNT was included in the vicinity of the surface of the active material layer opposite to the core body in Example 1 as shown in Table 1, an output characteristic (low output resistance) was obtained to be comparable to that of Comparative Example 1 in which the conductive auxiliary agent of the positive electrode plate was entirely the CNT and to be higher than that of Comparative Example 2 in which the conductive auxiliary agent was entirely the AB. Further, since the positive electrode plate of Example 1 includes the AB as a conductive auxiliary agent in the vicinity of the surface of the active material layer on the core body side, it is presumed that the positive electrode plate exhibits lower electric conductivity than that in Comparative Example 1 in which the conductive auxiliary agent of the positive electrode plate is entirely the CNT. In view of these, it is understood that according to the present invention, there are obtained: a positive electrode plate in which an improved output characteristic is obtained and electric conductivity is suppressed from being too high; and a battery including the positive electrode plate.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A positive electrode plate (10) comprising a core body (11) and an active material layer (12), wherein
the active material layer (12) includes a conductive auxiliary agent (22), and
the conductive auxiliary agent (22) present in a vicinity of a surface of the active material layer (12) opposite to the core body (11) includes a carbon nanotube.

2. The positive electrode plate according to claim 1, wherein the conductive auxiliary agent (22) present in a vicinity of a surface of the active material layer (12) on the core body (11) side includes acetylene black.

3. The positive electrode plate according to claim 1, wherein the conductive auxiliary agent (22) present in a vicinity of a surface of the active material layer (12) on the core body (11) side includes no carbon nanotube.

4. The positive electrode plate according to claim 1, wherein the active material layer (12) includes a deep layer (31) disposed on the core body (11) side, and a surficial layer (32) disposed on a side of the deep layer (31) opposite to the core body (11) side.

5. The positive electrode plate according to claim 1, wherein the active material layer (12) includes an active material particle, and the active material particle includes a large particle (23) and a small particle (24).

6. The positive electrode plate according to claim 1, wherein a particle packing density of the active material layer (12) is 3.0 to 3.8 g/cm³.

7. The positive electrode plate according to claim 1, wherein the core body (11) includes an aluminum alloy foil.

8. A non-aqueous electrolyte secondary battery comprising the positive electrode plate (10) according to claim 1.
